(19) Europäisches Patentamt / European Patent Office / Office européen des brevets

(11) **EP 1 963 886 B1**

(12) **FASCICULE DE BREVET EUROPEEN**

(45) Date de publication et mention
de la délivrance du brevet:
**10.04.2013 Bulletin 2013/15**

(21) Numéro de dépôt: **06831119.0**

(22) Date de dépôt: **13.11.2006**

(51) Int Cl.:
***G01V 1/30*** (2006.01)

(86) Numéro de dépôt international:
**PCT/FR2006/002522**

(87) Numéro de publication internationale:
**WO 2007/057560 (24.05.2007 Gazette 2007/21)**

(54) **METHODE D'EVALUATION QUANTITATIVE DES PRESSIONS DE FLUIDES ET DE DETECTION DES SURPRESSIONS D'UN MILIEU SOUTERRAIN**

QUANTITATIVE EVALUIERUNGSMETHODE VON FLÜSSIGKEITSDRÜCKEN UND ZUR ENTDECKUNG VON ÜBERDRÜCKEN IM UNTERGRUND

METHOD FOR QUANTITATIVELY EVALUATING FLUID PRESSURES AND FOR DETECTING EXCESS PRESSURES OF AN UNDERGROUND MEDIUM

(84) Etats contractants désignés:
**GB IT**

(30) Priorité: **14.11.2005 FR 0511530**

(43) Date de publication de la demande:
**03.09.2008 Bulletin 2008/36**

(73) Titulaire: **Institut Français du Pétrole
92852 Rueil Malmaison Cedex (FR)**

(72) Inventeurs:
• **RASOLOFOSAON, Patrick
F-91940 Les Ulis (FR)**
• **TONNELLOT, Thierry
F-92500 Rueil-Malmaison Cedex (FR)**

(56) Documents cités:
**WO-A-01/73476**

• **RASOLOFOSAON P ET AL: "Petroacoustic Characterization of Reservoir Rocks for Seismic Monitoring Studies" novembre 2003 (2003-11), OIL AND GAS SCIENCE AND TECHNOLOGY, ED. TECHNIP, PARIS, FR, PAGE(S) 615-635 , XP002277173 ISSN: 1294-4475 page 618, colonne de droite - page 620, colonne de gauche**
• **RASOLOFOSOAN P., ZINSZNER B.: "Laboratory petroacoustics for seismic monitoring feasibility study" THE LEADING EDGE, mars 2004 (2004-03), pages 252-258, XP002392555**
• **DÜRRAST H., RASOLOFOSAON P., SIEGESMUND S.: "P-wave velocity and permeability distribution of sandstones from a fractured tight gas reservoir" GEOPHYSICS, SEG, vol. 67, no. 1, janvier 2002 (2002-01), pages 241-253, XP002392556**

## Description

La présente invention concerne une méthode pour évaluer de façon quantitative les pressions de fluide dans le sous-sol avec une bonne résolution spatiale à l'aide de données sismiques et de puits en prenant en compte les variétés de nature géologiques des milieux traversés.

On peut utiliser la méthode dans le domaine pétrolier pour la détection des zones de surpression pour le forage.

## Présentation de l'art antérieur

Les documents suivants que l'on va citer dans le cours de la description ci-après, illustrent l'état de la technique :

- Barnola, A.S., Andrieux B., Tonellot T., Voutay O., 2003, Pre-stack stratigraphie inversion and attribute analysis for optimal reservoir characterisation, 73rd Ann. Internat. Mtg: Soc. of Expl. Geophys., 1493-1496, Dallas.

- Bertrand, C., Tonellot T., Fournier F., 2003, Seismic facies analysis applied to P and S impedances from pre-stack inversion, 72nd Ann. Internat. Mtg: Soc. of Expl. Geophys., 217,220.

- Bourbié, T., Coussy, O., Zinszner, B., 1987, Acoustics ofporous media, Editions Technip, Paris.

- Brac J.P. et al., 1988, Inversion with A Priori Information: An Approach to Integrated Stratigraphie Interpretation, Reservoir Geophysics R.E. Sheriff ed. Investigation in Geophysics, 7, SEG, Tulsa.

- T. Tonellot, D. Macé, V. Richard, 1999, Prestack elastic waveform inversion using a priori information, 69th Ann. Internat. Mtg: Soc. of Expl. Geophys., paper 0231, p.800-804.

- Eberhart-Phillips, D., Han, D.-H., and Zoback, M. D., 1989, Empirical relationships among seismic velocity, effective pressure, porosity, and clay content in sandstone: Geophysics, 54, 82-89.

- Grauls, D., Dunand, J.P., Beaufort, D., 1995, Predicting abnormal pressure from 2D seismic velocity modeling: Offshore Technology Conference, paper OTC 7692.

- Harkins, K.L., Baugher, J.W., 1969, Geological significance of abnormal formation pressures: J. Petroleum Geol., 961-966

- Lucet, N., Déquirez, P. -Y. and Cailly, F., 2000, Well to seismic calibration: A multiwell analysis to extract one single wavelet, 70th Ann. Internat. Mtg: Soc. of Expl. Geophys., 1615-1618.

- Pennebecker, E.S., 1968, Seismic data indicate depth, magnitude of abnormal pressure: World oil, 166, 73-78

- Reynolds, E.B, 1970, Predicting overpressured zones with seismic data: World oil, 171, 78-82.

- Shapiro, S.A., 2003, Elastic piezosensitivity of porous and fractured rocks: Geophysics, 68,482-486.

- Tonellot, T., Macé, D. and Richard, V., 2001, Joint stratigraphie inversion of angle-limited stacks, 71st Ann. Internat. Mtg: Soc. of Expl. Geophys., 227-230.

- Voutay, O., Fournier, F. and Royer, J., 2002, Seismic interprétation with new attributes extracted from a prestack multicube analysis, 72nd Ann. Internat. Mtg: Soc. of Expl. Geophys., 1762-1765.

- Yilmaz, O., 1987, Seismic Data Processing: Soc. of Expl. Geophys., 526. Zimmerman, R.W., 1984, The effect of pore structure on the pore and bulk compressibility of consolidated sandstones: Ph.D. dissertation, University of California at Berkeley.

La présence de zones de surpression en exploration peut avoir de lourdes conséquences financières, et parfois humaines, pour le forage en cas de méconnaissance des pressions de fluide. Prédire la présence de zones en surpression et plus généralement arriver à évaluer quantitativement les surpressions est devenu une priorité pour les compagnies pétrolières. En effet, dans le domaine de l'exploration, la pression de fluide peut approcher la contrainte minimale principale et induire la réouverture de fracture ou éventuellement initier une fracturation hydraulique. Dans le domaine du forage, il est important de connaître l'écart de pression entre la pression de fluide et la contrainte minimale en place pour le design des « casings » de puits et pour prévoir le poids de boue de manière à prévenir les éruptions (blow-out) en forage en « underbalanced » ou les pertes de boue en forage en « overbalanced ». Enfin la déplétion dans les zones de surpression peut induire des réagencement notables des contraintes avec éventuellement des conséquences importantes sur la productivité des réservoirs. Aussi une bonne évaluation quantitative des pressions de fluide et de leurs liens avec les variations de contrainte est également importante dans le domaine de la production.

Il existe de nombreuses méthodes permettant à partir de mesures physiques (et non à partir de modélisations) une évaluation quantitative des pressions de fluide : tests des formation, vitesse d'avancement de l'outil de forage; mesures de densité des argiles, Indices de gaz, débit-métrie, diagraphies différées, etc. Parmi ces méthodes, les méthodes géophysiques, et plus particulièrement les méthodes sismiques, à plus grande résolution spatiale que ses concurrentes (gravimétrie par exemple), sont les seules à pouvoir y arriver loin des puits. Il est donc primordial d'exploiter au mieux les données sismiques.

Toutefois les traitements sismiques conventionnellement utilisées, type analyse de vitesse (Yilmaz, 1987), ont une efficacité limitée (Pennebaker, 1968, Grauls et al., 1995) principalement du fait d'une part de leur résolution spatiale trop faible pour être efficacement utilisées pour le forage, et d'autre part de la faible prise en compte des variations lithologiques (Reynolds, 1970), souvent critiques dans les phénomènes de surpression. Pour comprendre ces principaux problèmes techniques, on décrit sommairement la procédure classique d'évaluation quantitative des surpressions à partir des données sismiques. Les différentes étapes sont les suivantes:

- obtention d'un modèle de vitesses sismiques aussi précis que possible par analyse fine de vitesse ;
- déduction d'une courbe de compaction de référence (vitesse sismique en fonction de la profondeur) dite de "compaction normale" (correspondant à la répartition hydrostatique de la pression fluide) ;
- interprétation des écarts entre la courbe de compaction mesurée par la sismique et la courbe de compaction normale en terme d'anomalies de pression fluide. Les anomalies (ou écarts par rapport à l'hydrostatique) peuvent être positives (surpressions) ou négatives.

Les principaux problèmes de ces méthodes sont d'une part la faiblesse relative de la résolution spatiale des méthodes conventionnelles, les rendant difficilement utilisable pour les opérations de forage. Le second problème est l'hypothèse implicite d'attribuer tout changement anomalique de vitesse à une surpression, en excluant par exemple des causes telles le changement de lithologie (Reynolds, 1970, par exemple). La vérification lithologique vient a posteriori dans la méthode classique. En d'autres termes on vérifie après tous les traitements que les anomalies de pressions ne sont pas dues à une variation lithologique.

La méthode proposée, basée sur l'inversion avant sommation des données sismiques, permet de surmonter ces deux difficultés majeures en fournissant un cube des pressions de fluide à une échelle suffisamment précise pour le foreur tout en prenant en compte la lithologie explicitement dans le traitement.

**La méthode selon l'invention**

L'invention concerne une méthode pour évaluer des pressions de fluide dans une zone du sous-sol à partir de données de puits issus d'au moins un puits et de données sismiques comportant au moins un cube sismique discrétisant ladite zone en volumes élémentaires repérés par leurs coordonnées horizontales (*x*, *y*) et verticale en temps (*t*). La méthode comporte les étapes suivantes :

a) on définit au moins un intervalle d'analyse en temps de ladite zone ;

b) on réalise sur ledit intervalle d'analyse une inversion stratigraphique avant sommation desdites données sismiques, avec utilisation d'information a priori géologique, pour construire au moins un cube d'impédance sismique ;

c) on détermine un cube de faciès lithosismique en effectuant une analyse lithosismique comprenant une interprétation dudit cube d'impédance sismique en terme de faciès lithosismiques à partir desdites données de puits ;

d) on détermine à partir desdites données de puits, des impédances sismiques audit puit exprimées en temps, ainsi que des pressions différentielles audit puit également exprimées en temps ;

e) on détermine pour chacun desdits faciès lithosismiques au moins une relation pétro-acoustique reliant lesdites impédances sismiques audit puit auxdites pressions différentielles audit puit, sur ledit intervalle d'analyse ;

f) on détermine un cube de pression différentielle en convertissant ledit cube d'impédance sismique à l'aide de ladite relation pétro-acoustique et ledit cube de faciès lithosismiques ;

g) on détermine un cube de pression de confinement à partir dudit cube d'impédance sismique ;

h) on détermine lesdites pressions de fluide sur l'ensemble de ladite zone, en effectuant la différence entre lesdites pressions différentielles et lesdites pression de confinement.

Selon la méthode, les données sismiques peuvent être des données sismiques 3D monocomposantes en onde P sommées partiellement par classes d'angle après traitement en amplitudes préservées et correction NMO. Dans ce cas, l'inversion stratigraphique avant sommation peut comporter les étapes suivantes :

- on extrait pour chaque classe d'angle, une ondelette cohérente avec lesdites données de puits ;

- on construit un modèle a priori comportant un cube a priori d'impédance d'onde P et un cube a priori d'impédance d'onde S.

- on réalise une inversion stratigraphique avant sommation de tous les cubes définis pour chaque classe d'angles, à partir de ladite ondelette et dudit modèle a priori.

L'analyse lithosismique peut comporter une analyse généralisée en composante principale suivie d'une analyse en faciès lithosismiques calibrée à l'aide desdites données de puits. Cette analyse lithosismique peut permetret au moins d'effectuer une discrimination entre des faciès argileux et des faciès sableux.

Selon un mode particulier, les données de puits peuvent comporter au moins les données en profondeur ($z$) suivantes :

- des vitesses sismiques issues de diagraphies acoustiques ;
- la densité totale, p($z$) ;
- la pression de fluide, $P_{pore}(z)$ ;

Les données de puits fournies en fonction de la profondeur z, peuvent alors être transformées comme des fonctions du temps $t$, à partir de la formule suivante :

$$t = \int_0^z \frac{2dz}{V_P(z)}$$

où $Y_P(z)$ représente les vitesses sismiques d'onde P.

Selon l'invention, on peut alors déterminer ladite relation pétro-acoustique, en temps, en réalisant les étapes suivantes :

- on calcule audit puit des impédances sismiques à partir de la densité totale et desdites vitesses sismiques ;
- on calcule des pressions de confinement à partir des données de vitesses sismiques et de densité totale, pour chaque pas de temps des données de puits ;
- on calcule des pressions différentielle par différence entre la pression de fluide audit puit $P_{pore}(t)$ et la pression de confinement, pour chaque pas de temps des données de puits ;
- on estime une relation à partir des données de vitesses sismiques, et des données de pression différentielle ;

Le cube de pression de confinement $P_{conf}(x, y, t)$ peut être déterminé à partir de l'équation suivante:

$$P_{conf}(x, y, t) = \int_0^t \frac{1}{2} I_P(x, y, t)g \; dt$$

où $I_P(x, y, t)$ représente un cube d'impédances acoustique.

A partir de la méthode, on peut détecter des zones de surpression pour un forage pétrolier, en appliquant un critère de seuil sur lesdites pressions de fluides.

De plue, en réalisant une conversion temps/profondeur des pressions de fluides évaluées, on peut repérer en profondeur des zones de surpressions, et l'on peut alors modifier les conditions de forage en fonction de la localisation et de l'intensité des zones de surpression. Par exemple, on peut modifier la trajectoire du puit de forage pour éviter lesdites zones de surpression, ou modifier la pression d'injection des fluides de forage pour compenser les surpressions des fluides du sous-sol.

La méthode peut également permettre d'évalue les pressions de fluide dans le sous-sol à des profondeurs non encore atteintes par le forage, en estimant des lithologies de profondeurs non encore atteintes par un forage par lesdites lithologies des profondeurs déjà atteintes, et en appliquant pour chacun desdits faciès lithosismiques lesdites lois pétro-acoustiques et lesdites ondelettes correspondant à l'intervalle d'analyse en temps le plus profond. On peut dans ce cas prédire les zones de surpression à des profondeurs non encore atteintes par le forage.

Enfin, selon l'invention, s'il on manque de diagraphies, on peut supposer que les pressions de fluides sont hydrostatique et on peut utiliser au moins l'une des données suivantes :

- des vitesses sismiques estimées à partir d'analyses de vitesse conventionnelles ;

- des densités estimées à partir desdites vitesses sismiques estimées par des relations empiriques de Gardner ;

D'autres caractéristiques et avantages de la méthode selon l'invention, apparaîtront à la lecture de la description ci-après d'exemples non limitatifs de réalisations, en se référant aux figures annexées et décrites ci-après.

## Présentation sommaire des figures

La figure 1 fournie une illustration générale des différentes étapes de la méthode.

La figure 2 représente en détail la partie de la figure 1 correspondant à la boucle d'analyse sismique (*SAL*).

La figure 3 représente en détail la partie de la figure 1 correspondant à la boucle d'analyse des données de puits (*WAL*).

La figure 4 représente un exemple d'ajustement de données expérimentales sur 3 modèles pétro-acoustiques $V_P=f(P_{diff})$.

## Description détaillée de la méthode

La méthode permet d'évaluer les pressions de fluide d'une zone du sous-sol à partir de données de puits et de données sismiques. Elle comporte principalement les six étapes suivantes :

1) Définition d'intervalles d'analyse en temps ;

2) Traitement des données sismiques sur chaque intervalle d'analyse : cubes d'impédances sismiques et cube de faciès lithosismique ;

3) Traitement des données de puits sur chaque intervalle d'analyse : relation pétro-acoustique entre impédance sismique aux puits et pression différentielle aux puits ;

4) Détermination d'un cube de pression différentielle ($P_{diff}(x, y, t)$)

5) Détermination d'un cube de pression de confinement ($P_{conf}(x, y, t)$)

6) Détermination d'un cube de pression de fluide ($P_{pore}(x, y, t)$)

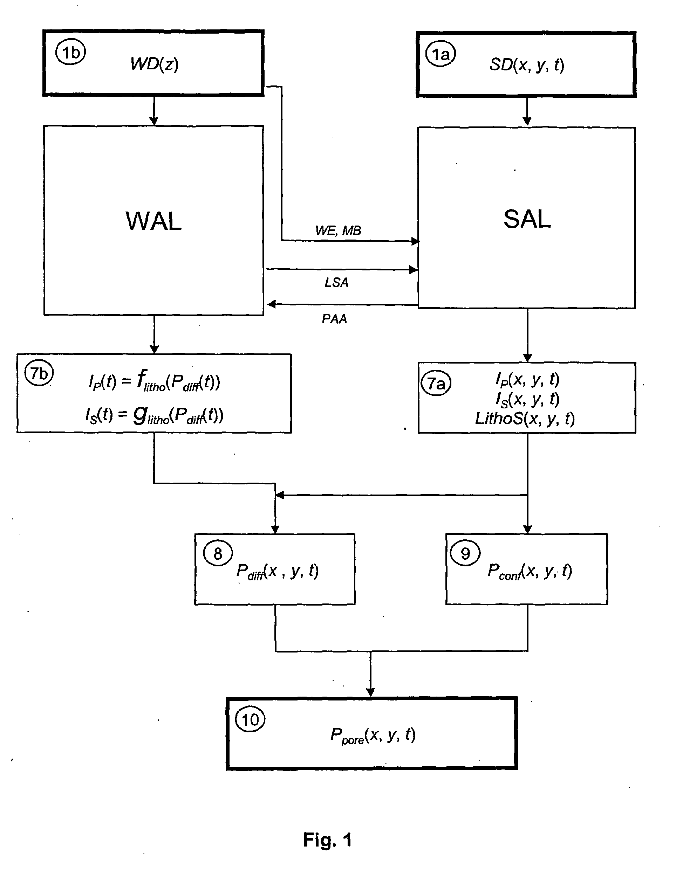

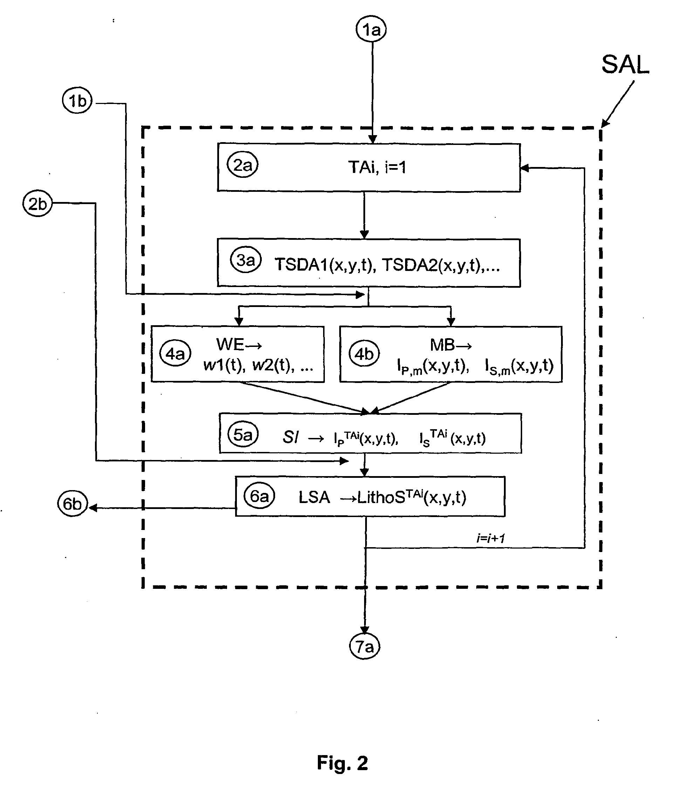

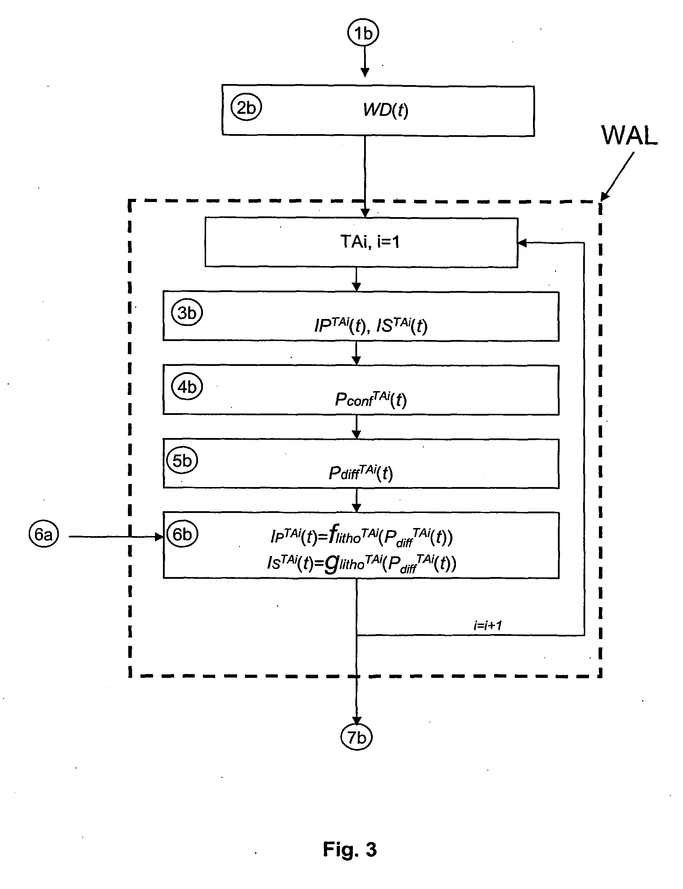

Les différentes étapes de la méthode sont représentées schématiquement sur les figures 1 à 3. La figure 1 fournie une illustration générale des différentes étapes de la méthode. Comme décrit de manière détaillée plus loin, ces étapes se composent de deux sous ensembles d'étapes interconnectés, à savoir sur le côté gauche de la figure les étapes correspondant au traitement des données de puits (détaillées sur la figure 3) et sur le côté droit de la figure les étapes correspondant au traitement des données sismiques (détaillées sur la figure 2). Suivant la convention habituelle les rectangles contiennent les données entrées ou les résultats obtenus à une certaine étape du traitement, l'étape étant repérée par un chiffre suivi éventuellement d'une lettre romaine minuscule (1a, 3b ou 9 par exemple). Ces rectangles sont reliés par des flèches descendantes pour la plupart, orientées dans le sens séquentiel des traitements, depuis l'entrée des données (en haut de la figure), jusqu'à la sortie finale des résultats (en bas de la figure). Pour clarifier la description rectangles sont parfois accompagnées du descriptif très sommaire de la technique (*SI*, *MB*, *LSA*, ...) permettant de passer d'un résultat au résultat suivant.

Selon la méthode, des pressions de fluide sont évaluées dans une zone du sous-sol sous la forme d'un cube discrétisant la zone à étudier. Cette discrétisation consiste à découper la zone en volumes élémentaires repérés par leurs coordonnées horizontales (*x*, *y*) et verticale soit en temps (*t*), soit en profondeur (*z*).

### 1) Définition d'intervalles d'analyse en temps :

Selon un exemple particulier, les données se composent de la façon suivante :

- les données sismiques, $SD(x, y, t)$, sont des données sismiques 3D monocomposantes en onde P avant sommation, acquises au cours d'une étape 1 a ;

- les données de puits, $WD(z)$, acquises au cours d'une étape 1b, comprennent principalement :

  - les vitesses sismiques issues des diagraphies acoustiques : vitesse des ondes P notée $V_P(z)$, et éventuellement vitesse des ondes S notée $V_S(z)$;

  - la densité totale, notée $\rho(z)$ ;

  - la pression de fluide, notée $P_{pore}(z)$ ;

  - le type de lithologie tel que carbonates, grès, argiles, sable, etc., noté $LithoG(z)$, où $z$ désigne la profondeur.

A partir des données sismiques, on identifie des horizons, encore appelés « marqueurs sismiques ». Ces horizons indiquent des discontinuités sismiques, lithologiques ou non, caractérisée par une variation de l'impédance sismique. On considère donc généralement que la partie du sous-sol comprise entre deux horizons est homogène d'un point de vue de ses propriétés pétro-élastiques.

Ainsi, selon la méthode, on divise la zone souterraine en plusieurs intervalles d'analyse en temps, délimités par des horizons sismiques, dans le but d'obtenir une précision accrue dans les résultats. Ainsi chaque intervalle d'analyse en temps est traité séparément pour identifier des propriétés bien spécifiques (ondelette, relation entre la lithologie et la sismique, etc.) et successivement, pour fournir un résultat global, décrit ultérieurement. Généralement on choisit ces intervalles d'analyse en temps inférieurs à 500ms, typiquement de l'ordre de 300ms à 400ms.

### 2) Traitement des données sismiques sur chaque intervalle d'analyse: cubes d'impédances sismiques et cube de faciès lithosismique :

Les données sismiques sont tout d'abord sommées partiellement par classes d'angle après traitement en amplitudes préservées et correction NMO, en suivant par exemple la méthode proposée par Tonellot et al (2001) (non représentées sur les figures). Typiquement on peut prendre cinq classes d'angles, à savoir 0°-6°, 6°-12°, 12°-18°, 18°-24° et 24°-30°. Suivant la qualité des données on pourra ajouter des classes d'angles supplémentaires (30-36° etc.), comme le suggère par exemple Barnola et al. (2003). Nous disposons donc d'au moins cinq cubes 3D correspondant à chacun des classes d'angles choisies.

On réalise ensuite une inversion stratigraphique (*SI*) et une analyse lithosismique (*LSA*) pour chacun des intervalles d'analyse en temps définis précédemment. Il s'agît de la boucle d'analyse sismique (*SAL*).

On commence donc tout d'abord avec un premier intervalle d'analyse en temps, *TA1* (étape 2a), et l'on tronque les cubes 3D correspondant à chacun des classes d'angles choisies pour se réduire à ce premier intervalle d'analyse en temps (étape 3 a).

Puis, à partir de ces cubes tronqués ($TSDA1(x, y, t)$, $TSDA2(x, y, t)$,...), on effectue une inversion stratigraphique (*SI*) avant sommation avec utilisation d'information a priori géologique. Cette technique est bien connue des spécialistes et l'on peut par exemple utiliser les techniques proposées par Brac et al. (1988), Tonellot et al. (1999) et Lucet et al. (2000). Ce type d'inversion comprend deux phases. La première phase (*WE*), selon la méthode décrite par Lucet et al. (2000), consiste à extraire pour chaque cube tronqué, c'est-à-dire pour chaque classe d'angle, la meilleure ondelette ($w1(t)$, $w2(t)$, ...) cohérente avec les données observées au puits (étape 4a). La seconde phase (*MB*), décrite par Tonellot et al. (1999), consiste à construire un modèle 3D a priori (étape 4b) nécessaire pour initier et contraindre l'inversion dans la prochaine étape. Il s'agit principalement de deux cubes 3D d'impédances sismiques, à savoir le cube a priori d'impédance des ondes P, noté $I_{P,m}(x, y, t)$, et le cube a priori d'impédance des ondes S, noté $I_{S,m}(x, y, t)$. Les coordonnées $x$ et $y$ sont les deux coordonnées horizontales liées à l'acquisition, typiquement « on-line » et « cross-line ». La troisième dimension n'est pas la profondeur z mais le temps d'enregistrement $t$, directement lié à la mesure sismique.

Enfin l'inversion (*SI*) à proprement parler est effectuée. Plus précisément, la connaissance des ondelettes et du modèle a priori sur l'intervalle d'analyse en temps choisi, permet d'inverser simultanément tous les cubes 3D (*TSDA1* (*x*, *y*, *t*), *TSDA2*(*x*, *y*, *t*),...), via une inversion stratigraphique avant sommation selon la méthode décrite par Tonellot et al. (2001). Cette inversion produit deux cubes 3D d'impédances sismiques, à savoir le cube d'impédances sismiques des ondes P, noté $I_P^{TA1}(x, y, t)$, et le cube d'impédances sismiques des ondes S, noté $I_S^{TA1}(x, y, t)$ (étape 5a).

Selon la méthode, il n'est pas indispensable en pratique d'obtenir les deux types d'impédances sismiques, P et S, mais la plupart des techniques d'inversion avant sommation produisent les deux types de cubes.

Après cette première étape d'inversion stratigraphique, pour le même intervalle d'analyse en temps (*TA1*), on réalise une analyse lithosismique (*LSA*) de cubes d'impédances sismiques obtenus, à l'aide des données de puits. L'analyse lithosismique est une interprétation des cubes 3D d'impédances sismiques en terme de faciès sismique au regard des différentes lithologies rencontrées aux puits.

L'analyse lithosismique consiste à interpréter les données sismiques en terme de faciès, c'est-à-dire en groupes de données homogènes. On parle de faciès lithosismiques car c'est faciès sont des faciès sismiques (groupes de variables sismiques) interprétés en terme de faciès lithologique (grès, calcaire, argile, etc.). Cette interprétation peut se faire a priori ou a posteriori, selon les méthodes. En général, on commence par définir un certains nombres d'attributs sismiques (amplitudes, fréquences, impédance,...). Ce nombre peut être avantageusement réduit à l'aide de technique comme l'analyse en composante principal, ou l'analyse en composante principale généralisée. A partir de ces attributs, on utilise des techniques de classement (analyse discriminante par exemple) pour construire les faciès sismiques. Si l'on souhaite faire une analyse a priori des faciès, il faut définir des attributs communs aux données de puits (convertie alors en temps) et aux données sismiques. De telles méthodes sont par exemple décrites par Bertrand et al. (2002), Voutay et al. (2002) et Barnola et al. (2003).

Selon un exemple de réalisation, on réalise cette analyse en effectuant une analyse généralisée en composante principale (Voutay et al. (2002)) suivie d'une analyse lithosismique calibrée aux puits (interprétation a priori). Comme les phénomènes de surpression sont étroitement liés à la lithologie, et en particulier au faible contenu en sable (Harkins et Baugher, 1969, par exemple), l'analyse est principalement orientée dans le sens de la discrimination entre faciès argileux et faciès sableux, et peut comprendre typiquement au minimum deux faciès argileux, un plus compact, donc moins perméable que le second, un faciès correspondant à un mélange sable/argile et un faciès sableux (voir par exemple Bertrand et al., 2002). La probabilité de présence de surpression diminuant du premier jusqu'au dernier faciès. Cette analyse permet d'aboutir à une interprétation lithologique *LithoS*$^{TA1}$(*x*, *y*, *t*) sur l'ensemble du cube dans l'intervalle d'analyse (*TA1*) à l'échelle sismique, c'est-à-dire à l'échelle de la mesure (étape 6a).

Cependant pour réaliser une telle analyse (avec interprétation a priori des faciès sismique), il est nécessaire de posséder les données aux puits en temps et non en profondeur. C'est pourquoi, en parallèle de ce traitement des données sismiques, on réalise un traitement des données de puits, dont une partie consiste à effectuer cette conversion profondeur/temps (étape 2b), ce traitement étant décrit ci-après.

A l'issu de cette boucle sismique (*SAL*), l'ensemble des cubes $I_P^{TA1}(x, y, t)$, $I_P^{TA2}(x, y, t)$, ..., $I_S^{TA1}(x, y, t)$, $I_S^{TA2}(x, y, t)$, , ..., ainsi que *LithoS*$^{TA1}$(*x*, *y*, *t*), *LithoS*$^{TA2}$(*x*, *y*, *t*), ..., permettent de former trois cubes représentatif de l'ensemble de la zone étudiée (étape 7a) :

- $I_P(x, y, t)$

- $I_S(x, y, t)$

- *LithoS(x, y, t)*

3) Traitement des données de puits sur chaque intervalle d'analyse: relations pétro-acoustique

*Conversion profondeur/temps (étape 2b)*

Parallèlement aux traitement des données sismiques, les données de puits, fournies en fonction de la profondeur $z$ à l'étape 1b ($WD(z)$), sont transformées en fonctions du temps $t$ ($WD(t)$). Ce temps $t$ est le temps d'enregistrement sismique, appelé encore « temps double » car il correspond au temps aller-retour mis par l'onde sismique P pour se propager dans le sous-sol et revenir en surface après réflexion sur une interface géologique.

La conversion profondeur/temps (étape 2b), c'est-à-dire le passage de coordonnées en profondeur z en coordonnées temps $t$, est alors réalisée par la relation suivante :

$$t = \int_0^z \frac{2dz}{V_P(z)} \qquad\qquad (1)$$

Après cette conversion profondeur/temps, on dispose des données suivantes :

- les vitesses sismiques issues des diagraphies acoustiques : vitesse des ondes P notée $V_P(t)$, et éventuellement vitesse des ondes S notée $V_S(t)$ ;

- la densité totale, notée $\rho(t)$ ;

- la pression de fluide, notée $P_{pore}(t)$ ;

- le type de lithologie tel que carbonates, grès, argiles, sable, etc., noté *LithoG(t)*.

Toujours en parallèle, on commence la boucle d'analyse des données de puits (*WAL*) sur chacun des intervalles d'analyse en temps définis précédemment.

On commence donc tout d'abord avec un premier intervalle d'analyse en temps (*TA1*), le même que pour l'analyse sismique, et l'on se réduit aux données de puits disponibles dans ce premier intervalle d'analyse en temps.

*Calcul des impédances sismiques aux puits (étape 3b)*

On calcule les impédances sismiques aux puits (étape 3b), par exemple $I_P(t)$ et $I_S(t)$, qui sont, par définition, reliées aux vitesses $V_P(t)$ et $V_S(t)$ et à la densité $\rho(t)$ par les relations suivantes :

$$I_P(t) = \rho(t).V_P(t) \text{ et } I_S(t) = \rho(t).V_S(t) \qquad\qquad (2)$$

On obtient ainsi sur l'intervalle d'analyse *TA1* les données suivantes : $I_P^{TA1}(t)$ et $I_S^{TA1}(t)$.

*Calcul de la pression de confinement aux puits (étape 4b)*

Par ailleurs la pression de confinement, assimilée à la pression géostatique, correspondant à une colonne de sédiment de hauteur égale à la profondeur du point considéré est donnée par la relation suivante :

$$P_{conf}(t) = \int_0^z \rho(z)g\,dz = \int_0^t \rho(t)g\frac{V_P(t)}{2}dt \qquad\qquad (3)$$

La première égalité est due à la définition de la pression statique et la seconde égalité est liée à la conversion profondeur/temps, sachant que le temps considéré correspond au temps double (d'où le facteur ½) d'aller en profondeur et de retour en surface de l'onde P.

On obtient ainsi sur l'intervalle d'analyse *TA1* les données suivantes : $P_{conf}^{TA1}(t)$.

*Calcul de la pression différentielle aux puits (étape 5b)*

La pression différentielle $P_{diff}(t)$ est obtenue par simple soustraction entre la pression de confinement $P_{conf}(t)$ et la pression de pore $P_{pore}(t)$ :

$$P_{diff}(t) = P_{conf}(t) - P_{pore}(t) \qquad (4)$$

On obtient ainsi sur l'intervalle d'analyse *TA1* les données suivantes : $P_{diff}^{TA1}(t)$.

*Détermination de relations entre $P_{diff}$ et les impédances. (PAA, étape 6b)*

La pression différentielle $P_{diff}$, joue un rôle central dans la dépendance des vitesses sismiques $V_P$ et $V_S$ en fonction des pressions comme l'illustre l'abondante littérature dans le domaine de la physique des roches (par exemple Bourbié et al. 1987). Plus précisément la dépendance des vitesses $V_P$ et $V_S$ en fonction des pressions peut être résumée par des fonctions dépendant de l'unique pression différentielle $P_{diff}$, et non des pressions de confinement $P_{conf}$ et de pore $P_{pore}$ séparément. Aussi, après élimination du paramètre temps $t$ entre les fonctions $I_P(t)$ et $P_{diff}(t)$, et entre les fonctions $I_S(t)$ et $P_{diff}(t)$, on peut obtenir les relations pétro-acoustiques suivantes pour chaque faciès lithologique sismique identifié à l'étape 6a, et pour l'intervalle d'analyse *TA1* :

$$I_P^{TA1} = f_{litho}^{TA1}(P_{diff}^{TA1}) \text{ et } I_S^{TA1} = f_{litho}^{TA1}(P_{diff}^{TA1}) \qquad (5)$$

Pour ce faire, on regroupe, pour l'intervalle d'analyse *TA1*, toutes les valeurs de $I_P^{TA1}(t)$ et $P_{diff}^{TA1}(t)$ (t)

pour un faciès lithologique donnée. On construit pour cette lithologie un digramme croisé, dans lequel chaque point est repéré par une première coordonnée correspondant à sa valeur de $P_{diff}^{TA1}(t_1)$ à un temps $t_1$, et par une seconde coordonnée correspondant à sa valeur de $I_P^{TA1}(t_1)$ au même temps $t_1$. Puis à partir de ce diagramme croisé entre les valeurs de $I_P^{TA1}(t)$ et $P_{diff}^{TA1}(t)$ pour une lithologie donnée, on estime une relation, une fonction, permettant de déduire la pression différentielle à partir de l'impédance sismique. On peut par exemple choisir une relation simple, telle qu'une régression linéaire, mais on peut également s'appuyer sur des relations plus réalistes couramment utilisés en Physique des Roches (par exemple, Eberhardt-Phillips et al., 1989, Shapiro, 2003).

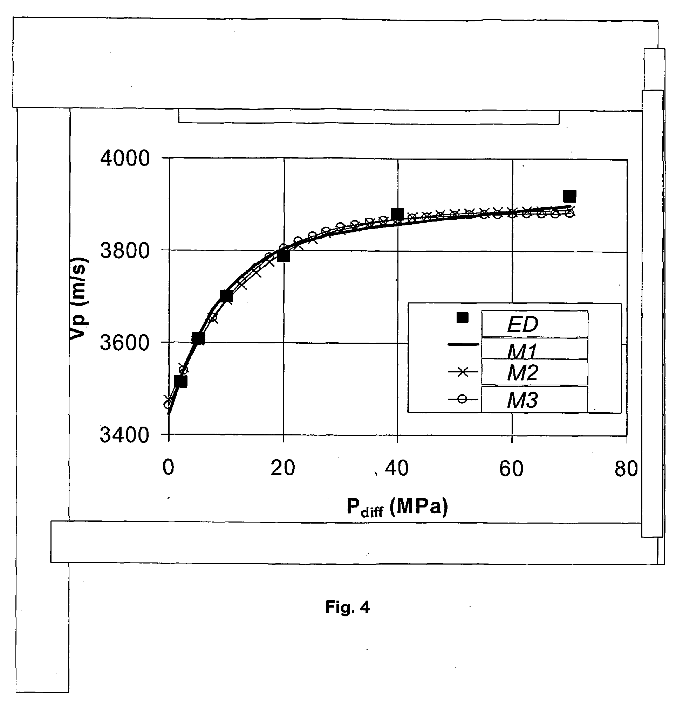

La figure 4 donne un exemple d'un ajustement d'une relation entre la pression différentielle et la vitesse des ondes P issues de données expérimentales (*ED*) provenant d'analyses de grès. Le diagramme croisé de cette figure représente en abscisse la pression différentielle, et en ordonnée la vitesse des ondes P (on rappelle que $I_P(t) = \rho(t).V_P(t)$). On a utilisé trois types de relations (*M1*, *M2* et *M3*) tirées des références précédentes :

*M1 : $V_P = A + B.P_{diff} - C.e^{-D.P_{diff}}$*

*M2 : $V_P = A - C.e^{-D.P_{diff}}$*

$M3 : V_P = A/1 + C.e^{-D.P_{diff}}$

On réalise ensuite la même opération, si nécessaire, pour les impédances sismiques $I_S^{TA1}(t)$. Ces relations sont valables dans l'intervalle d'analyse en temps considéré et constitue le résultat essentiel de l'analyse des données de puits en terme pétro-acoustique.

A l'issu de cette analyse des données de puits (*WAL*), les relations (5) permettent de définir une relation représentative de l'ensemble de la zone étudiée (étape 7b) :

$$I_P = f_{litho}(P_{diff}) \quad \text{et} \quad I_S = g_{litho}(P_{diff}) \tag{6}$$

4) Détermination d'un cube de pression différentielle $P_{diff}$(x, y, t) (étape 8)

A l'issue des boucles d'analyse sur les différents intervalles d'analyse en temps (jusqu'à épuisement de tous les intervalles d'analyse), on dispose sur toute la zone à étudier :

- d'un cube d'impédances sismiques d'onde P : $I_P$(x, y, t) ; (éta pe 7a)

- d'un cube d'impédances sismiques d'onde S : $I_S$(x, y, t) ; (éta pe 7a)

- d'un cube de faciès lithosismique : *LithoS*(x, y, t) ; (éta pe 7a)

- les relations pétro-acoustiques (6) :

$I_P = f_{litho}(P_{diff})$ et $I_S = g_{litho}(P_{diff})$

(étape 7b)

Ainsi, chaque faciès étant identifié par la fonction *LithoS*(x, y, t), les cubes d'impédance sismique $I_P$(x, y, t) et $I_S$(x, y, t) peuvent être convertis en un cube de pression différentielle $P_{diff}$(x, y, t) (étape 8), en utilisant les relations pétro-acoustiques (6).

5) Détermination d'un cube de pression de confinement $P_{conf}$(x, y, t) (étape 9)

Par ailleurs, en utilisant les équations (2) et (3), un cube de pression de confinement $P_{conf}$(x, y, t) peut être obtenue (étape 9) par l'équation suivante :

$$P_{conf}(x, y, t) = \int_0^t \frac{1}{2} \rho(x, y, t) V_P(x, y, t)\, g\, dt$$

$$P_{conf}(x, y, t) = \int_0^t \frac{1}{2} I_P(x, y, t) g\, dt \tag{7}$$

Notons que dans la première égalité, la fonction $\rho$(x, y, t) est inconnue car les densités ne sont mesurées qu'aux puits et sont mal inversées par la sismique (Barnola et al., 2003). Toutefois, le produit de la densité et de la vitesse des ondes P étant égale à l'impédance $I_P$(x, y, t), grandeur parfaitement inversée par la sismique (étape 5a), la dernière égalité est parfaitement utilisable.

6) Détermination d'un cube de pressons de fluide $P_{pore}$(x, y, t) (étape 10)

Le cube de pression de fluide $P_{pore}$(x, y, t) est obtenu (étape 10) par simple soustraction entre les cubes de pression de confinement $P_{conf}(x, y, t)$ et différentielle $P_{diff}(x, y, t)$ :

$$P_{pore}(x, y, t) = P_{conf}(x, y, t) - P_{diff}(x, y, t) \qquad (8)$$

Ainsi la méthode permet une évaluation quantitative des pressions de fluide sous forme de cubes 3D de pression de fluide $P_{pore}(x, y, t)$ en prenant en compte explicitement le type de lithologie.

7) Réalisations particulières

*Détermination de zones de surpressions en temps*

A partir de la méthode selon l'invention, il est possible de prédire, avec une bonne résolution spatiale, les zones éventuelles de surpressions pouvant présenter un danger lors d'un forage pétrolier par exemple. En effet, les cubes 3D de pression de fluide $P_{pore}(x, y, t)$ et de pression de confinement $P_{conf}(x, y, t)$, étant connus, il suffit d'appliquer un critère de seuil sur la pression de pore au choix de l'utilisateur. On peut par exemple utiliser le seuil égale à $0,9*P_{conf}(x, y, t)$.

*Détermination de zones de surpressions en profondeur*

Selon la méthode, il est également possible d'obtenir le même type de résultat en profondeur $z$ et non en temps $t$, ce qui peut être capital pour définir les conditions de forage. En effet, le problème du passage des cubes en coordonnées temporelles à des cubes en coordonnées exprimées en profondeur est un problème général bien connu en traitement sismique (Yilmaz, 1987, par exemple), et toute méthode ayant fait les preuves de son efficacité (stretch vertical, « map migration », etc.) peuvent être appliquées. En effet une telle méthode de conversion permet simplement de passer de « l'espace temps » à « l'espace profondeur » en utilisant la fonction de conversion de la variable temps $t$ en la variable profondeur $z$. On obtient alors sans difficulté un cube en profondeur des pressions de fluide $P_{pore}(x, y, z)$. Cette évaluation quantitative des pressions de fluide dans le sous-sol permet évidemment de repérer, en profondeur cette fois, les zones de surpressions anormalement élevées et pouvant présenter un danger pour un forage pétrolier.
A partir de cette information, on peut modifier la trajectoire du puit de forage pour éviter ces zones de surpression, ou encore, on peut modifier la pression d'injection des fluides de forage pour compenser les surpressions des fluides du sous-sol.
Notons que cette conversion temps profondeur est excellente au voisinage des puits, bonne entre les puits et moins fiable très loin des puits et à des profondeurs non encore atteintes par le forage.

*Détermination de zones de surpressions à des profondeurs non encore atteintes par les puits*

La méthode permet de prédire les valeurs de pressions de fluide à partir, entre autre, des données de puits. Ainsi, si une profondeur n'a pas encore été atteinte par les puits, on ne dispose d'aucune donnée pour estimer les pressions et/ou les zones de surpressions. Sous réserve de certaines hypothèses détaillées ci-après, il est cependant possible d'étendre les analyses précédentes à des profondeurs non encore atteintes par le forage.
Première hypothèse : les profondeurs non encore atteintes par le forage ne contiennent pas de nouvelles lithologies, c'est-à-dire des lithologies non encore rencontrées aux profondeurs déjà atteintes. Il est clair qu'en présence de nouvelles lithologies à de plus grandes profondeurs l'analyse proposée est inadaptée, car aucune loi pétrophysique du type de celle décrite par l'équation (6), permettant la conversion des paramètres sismiques en pression, ne serait disponible.
Seconde hypothèse : les faciès lithosismiques et les lois pétro-acoustiques déjà obtenues ne sont bas substantiellement changées et restent toujours valables.
Troisième hypothèse : les dernières ondelettes nécessaire à l'inversion, et correspondant à l'intervalle d'analyse en temps le plus profond atteint par les puits, ne subit pas de modifications substantielles dans les niveaux plus profonds.
Sous ces hypothèses, il est possible d'étendre la méthode à des profondeurs non encore atteintes par le forage, et de prédire ainsi les surpressions à des profondeurs non encore atteintes par le forage. En d'autres termes, on évalue les pressions de fluide dans le sous-sol à des profondeurs non encore atteintes par le forage, en estimant les lithologies de profondeurs non encore atteintes par un forage, par les lithologies des profondeurs déjà atteintes, et en appliquant pour chacun des faciès lithosismiques, les lois pétro-acoustiques et les ondelettes correspondant à l'intervalle d'analyse en temps le plus profond.

**EP 1 963 886 B1**

*Problème de la non disponibilité partielle des données de puits en surface*

Si l'on ne possède pas suffisamment de données de puits, non pas en profondeur mais en terme de diagraphies (absence de diagraphie permettant de connaître la densité par exemple), il est toujours envisageable de combler ce manque partiel par des techniques conventionnelles. Ainsi, par exemple, dans les zones non investiguées par certaines diagraphies (données de puits) on pourra prendre :

- les valeurs de vitesses estimées à partir des analyses de vitesse conventionnelles et citées dans l'art antérieur ;

- les valeurs de densité déduites des relations empiriques de Gardner entre densité et vitesses (Yilmaz, 1987, par exemple) ;

- la pression de pore pourra être supposée hydrostatique, à défaut de méthode d'évaluation plus précise.

*Complément de méthodes conventionnelles*

On peut judicieusement utiliser l'invention en complément des méthodes conventionnelles d'évaluation quantitative des pressions de fluide par l'analyse de vitesse soignée des données sismiques (Grauls et Dunand, 1995, par exemple).

A l'aide d'une méthode conventionnelle, on détermine grossièrement la répartition de pressions de fluide dans le sous-sol. Ces résultats, bien qu'étant insuffisamment précis, donnent une idée générale de la répartition des zones à surpression à identifier et à décrire plus finement. Il s'agît souvent des prochaines zones à prospecter entre les puits existants mais éloignés ou à des profondeurs non encore atteintes.

On peut alors appliquer la méthode selon l'invention uniquement sur ces zones où l'on suspecte une surpression.

La méthode selon l'invention permet donc d'estimer les pressions de fluide dans une zone du sous-sol, ainsi que les zones de surpression, en temps ou en profondeur, et même pour des profondeurs non encore atteintes. La méthode est caractérisée par une grande résolution spatiale par rapport aux méthodes conventionnelles basées sur des analyses de vitesse. Elle permet de définir les conditions de forage (trajectoire, pression de fluide de forage, etc.), car elle donne des résultats très précis en tenant compte de la lithologie dès le début du traitement de manière quantitative et non de manière qualitative et a posteriori comme c'est le cas dans les approches conventionnelles. Enfin, la méthode exploite au maximum des données acquises au niveau de l'échelle sismique, proche de la mesure directe, pour éviter les problèmes de changement d'échelle (géologique, réservoir et, sismique).

Il faut également noter que pour simplifier la description, l'exemple particulier est illustré à partir de données particulières qui ne limitent pas l'invention. D'autres données de puits ou sismiques peuvent être utilisées, comme par exemple des données sismiques multi composantes.

## Revendications

1. Méthode pour évaluer des pressions de fluide dans une zone du sous-sol à partir de données de puits issues d'au moins un puits et de données sismiques comportant au moins un cube sismique discrétisant ladite zone en volumes élémentaires repérés par leurs coordonnées horizontales ($x$, $y$) et verticale en temps (t), **caractérisée en ce qu'**elle comporte les étapes suivantes :

   a) on définit au moins un intervalle d'analyse en temps de ladite zone ;
   b) on réalise sur ledit intervalle d'analyse une inversion stratigraphique avant sommation desdites données sismiques, avec utilisation d'information a priori géologique, pour construire au moins un cube d'impédance sismique ;
   c) on détermine un cube de faciès lithosismique en effectuant une analyse lithosismique comprenant une interprétation dudit cube d'impédance sismique en terme de faciès lithosismiques à partir desdites données de puits ;
   d) on détermine à partir desdites données de puits, des impédances sismiques audit puits exprimées en temps, ainsi que des pressions différentielles audit puits également exprimées en temps ;
   e) on détermine pour chacun desdits faciès lithosismiques au moins une relation pétro-acoustique reliant lesdites impédances sismiques audit puits auxdites pressions différentielles audit puits, sur ledit intervalle d'analyse ;
   f) on détermine un cube de pression différentielle en convertissant ledit cube d'impédance sismique à l'aide de ladite relation pétro-acoustique et ledit cube de faciès lithosismiques ;
   g) on détermine un cube de pression de confinement à partir dudit cube d'impédance sismique ;

h) on détermine lesdites pressions de fluide sur l'ensemble de ladite zone, en effectuant la différence entre lesdites pressions différentielles et lesdites pression de confinement.

2. Méthode selon la revendication 1, dans laquelle lesdites données sismiques sont des données sismiques 3D monocomposantes en onde P sommées partiellement par classes d'angle après traitement en amplitudes préservées et correction NMO.

3. Méthode selon la revendication 2, dans laquelle ladite inversion stratigraphique avant sommation comporte les étapes suivantes :

   - on extrait pour chaque classe d'angle, une ondelette cohérente avec lesdites données de puits ;
   - on construit un modèle a priori comportant un cube a priori d'impédance d'onde P et un cube a priori d'impédance d'onde S.
   - on réalise une inversion stratigraphique avant sommation de tous les cubes définis pour chaque classe d'angles, à partir de ladite ondelette et dudit modèle a priori.

4. Méthode selon l'une des revendications précédentes, dans laquelle l'analyse lithosismique comporte une analyse généralisée en composante principale suivie d'une analyse en faciès lithosismiques calibrée à l'aide desdites données de puits.

5. Méthode selon l'une des revendications précédentes, dans laquelle l'analyse lithosismique permet au moins d'effectuer une discrimination entre des faciès argileux et des faciès sableux.

6. Méthode selon l'une des revendications précédentes, dans laquelle lesdites données de puits comprennent au moins les données en profondeur (z) suivantes :

   - des vitesses sismiques issues de diagraphies acoustiques ;
   - la densité totale, $\rho(z)$ ;
   - la pression dé fluide, $P_{pore}(z)$ ;

7. Méthode selon la revendication 6, dans laquelle lesdites données de puits fournies en fonction de la profondeur $z$, sont transformées comme des fonctions du temps $t$, à partir de la formule suivante :

$$t = \int_0^z \frac{2dz}{V_P(z)}$$

où $V_P(z)$ représente les vitesses sismiques d'onde P.

8. Méthode selon la revendication 7, dans laquelle on détermine ladite relation pétro-acoustique, en temps, en réalisant les étapes suivantes :

   - on calcule audit puit des impédances sismiques à partir de la densité totale et desdites vitesses sismiques ;
   - on calcule des pressions de confinement à partir des données de vitesses sismiques et de densité totale, pour chaque pas de temps des données de puits ;
   - on calcule des pressions différentielle par différence entre la pression de fluide audit puit $P_{pore}(t)$ et la pression de confinement, pour chaque pas de temps des données de puits ;
   - on estime une relation à partir des données de vitesses sismiques, et des données de pression différentielle ;

9. Méthode selon l'une des revendications précédentes, dans laquelle on détermine ledit cube de pression de confinement $P_{conf}(x, y, t)$ à partir de l'équation suivante:

$$P_{conf}(x, y, t) = \int_0^t \frac{1}{2} I_P(x, y, t)g \ dt$$

où $I_P(x, y, t)$ représente un cube d'impédances acoustique.

10. Méthode selon l'une des revendications précédentes, dans laquelle on détecte des zones de surpression pour un forage pétrolier, en appliquant un critère de seuil sur lesdites pressions de fluides.

11. Méthode selon l'une des revendications précédentes, dans laquelle on réalise une conversion temps/profondeur desdites pressions de fluides évaluées.

12. Méthode selon la revendication 11, dans laquelle on repère en profondeur des zones de surpressions, et l'on modifie les conditions de forage en fonction de la localisation et de l'intensité des zones de surpression.

13. Méthode selon la revendication 12, dans laquelle on modifie la trajectoire du puit de forage pour éviter lesdites zones de surpression.

14. Méthode selon la revendication 12, dans laquelle on modifie la pression d'injection des fluides de forage pour compenser les surpressions des fluides du sous-sol.

15. Méthode selon l'une des revendications précédentes, dans laquelle on évalue lesdites pressions de fluide dans le sous-sol à des profondeurs non encore atteintes par le forage, en estimant des lithologies de profondeurs non encore atteintes par un forage par lesdites lithologies des profondeurs déjà atteintes, et en appliquant pour chacun desdits faciès lithosismiques lesdites lois pétro-acoustiques et lesdites ondelettes correspondant à l'intervalle d'analyse en temps le plus profond.

16. Méthode selon la revendication 15, dans laquelle on prédit les zones de surpression à des profondeurs non encore atteintes par le forage.

17. Méthode selon l'une des revendications précédentes, dans laquelle on suppose que les pressions de fluides sont hydrostatique et on utilise au moins l'une des données suivantes :

    - des vitesses sismiques estimées à partir d'analyses de vitesse conventionnelles ;
    - des densités estimées à partir desdites vitesses sismiques estimées par des relations empiriques de Gardner.

**Claims**

1. A method of evaluating fluid pressures in an underground zone on the basis of well data from at least one well and seismic data comprising at least one seismic cube discretising said zone into elementary volumes located by their horizontal and vertical co-ordinates (x, y) in time (t), **characterised in that** it comprises the following steps:

    a) defining at least one analysis interval in respect of time of said zone;
    b) performing a stratigraphic inversion prior to summing of said seismic data in said analysis interval, with the use of a priori geological information, to construct at least one seismic impedance cube;
    c) determining a lithoseismic facies cube by performing lithoseismic analysis comprising interpretation of said seismic impedance cube in terms of lithoseismic facies from said well data;
    d) determining from said well data seismic impedances at said well expressed in respect of time, as well as differential pressures at said well which are also expressed in respect of time;
    e) determining for each of said lithoseismic facies at least one petro-acoustic relationship linking said seismic impedances at said well to said differential pressures at said well, in said analysis interval;
    f) determining a differential pressure cube by converting said seismic impedance cube by means of said petro-acoustic relationship and said lithoseismic facies cube;
    g) determining a confinement pressure cube from said seismic impedance cube; and
    h) determining said fluid pressures over the whole of said zone by performing the difference between said differential pressures and said confinement pressures.

2. A method according to claim 1 wherein said seismic data are P wave 3D monocomponent seismic data partially summed by angle classes after processing in respect of preserved amplitudes and NMO correction.

3. A method according to claim 2 wherein said stratigraphic inversion prior to summing comprises the following steps:

- extracting a wavelet coherent with said well data for each angle class;
- constructing an a priori model comprising a P wave impedance a priori cube and an 5 wave impedance a priori cube, and
- effecting a stratigraphic inversion prior to summing in respect of all the cubes defined for each class of angles, from said wavelet and said a priori model.

4. A method according to one of the preceding claims wherein the lithoseismic analysis comprises generalised analysis in respect of principal component followed by analysis in respect of lithoseismic facies which is calibrated by means of said well data.

5. A method according to one of the preceding claims wherein the lithoseismic analysis makes it possible to discriminate between argillaceous facies and sandy facies.

6. A method according to one of the preceding claims wherein said well data comprise at least the following data in respect of depth (z):

   - seismic velocities obtained from acoustic logs;
   - total density, p(z); and
   - fluid pressure, $P_{pore}$(z).

7. A method according to claim 6 wherein said well data provided as a function of the depth z are transformed as functions of time t, from the following formula:

$$t = \int_0^z \frac{2dz}{V_p(z)}$$

wherein $V_P$(z) represent the P wave seismic velocities.

8. A method according to claim 7 wherein said petro-acoustic relationship is determined in respect of time by performing the following steps:

   - calculating seismic impedances at said well from the total density and said seismic velocities;
   - calculating confinement pressures from the seismic velocity and total density data for each time interval of the well data;
   - calculating differential pressures by the difference between the fluid pressure at said well $P_{pore}$(t) and the confinement pressure for each time Interval of the well data; and
   - estimating a relationship from the seismic velocity data and the differential pressure data.

9. A method according to one of the preceding claims wherein said confinement pressure cube $P_{conf}$(x,y,t) is determined from the following equation:

$$P_{conf}(x, y, t) = \int_0^t \frac{1}{2} I_P(x, y, t) g dt$$

in which $I_P$ (x,y,t) represents an acoustic impedance cube.

10. A method according to one of the preceding claims wherein overpressure zones are detected for a petroleum drilling by applying a threshold criterion to said fluid pressures.

11. A method according to one of the preceding claims wherein time/depth conversion of said evaluated fluid pressures is effected.

12. A method according to claim 11 wherein overpressure zones are located in respect of depth and the drilling conditions are modified in dependence on the location and intensity of the overpressure zones.

13. A method according to claim 12 wherein the trajectory of the drilling well is modified to avoid said overpressure zones.

**14.** A method according to claim 12 wherein the injection pressure of the drilling fluids is modified to compensate for the underground fluid overpressures.

**15.** A method according to one of the preceding claims wherein said fluid pressures underground are evaluated at depths which have not yet been reached by the drilling, by estimating lithologies in respect of depths which have not yet been reached by a drilling by said lithologies in respect of depths which have already been reached, and by applying for each of said lithoseismic facies said petro-acoustic laws and said wavelets corresponding to the deepest time analysis interval.

**16.** A method according to claim 15 wherein the overpressure zones are predicted at depths which have not yet been reached by the drilling.

**17.** A method according to one of the preceding claims wherein it is assumed that the fluid pressures are hydrostatic and at least one of the following data is used:

- seismic velocities estimated from conventional velocity analyses; and
- densities estimated from said seismic velocities estimated by Gardner's empirical relations.

**Patentansprüche**

**1.** Verfahren zur Bewertung des Flüssigkeitsdruckes in einem unterirdischen Bereich auf Grundlage von Daten von Bohrlöchern, welche wenigstens ein Bohrloch umfassen, sowie von seismischen Daten mit mindestens einem seismischen Kubus, mit einer Unterteilung des besagten Bereichs in grundlegende Volumen, in einem Zeitabschnitt (t) bezeichnet durch ihre horizontalen und vertikalen Koordinaten (x, y) **dadurch gekennzeichnet, dass** das Verfahren folgende Abschnitte umfasst:

a) wenigstens ein Intervall wird festgelegt zur zeitgerechten Analyse des betreffenden Bereichs:
b) im genannten Intervall der Analyse wird eine stratigrafische Inversion vor der Summierung der genannten seismischen Daten unternommen, mit Einsichtname in frühere geologische Informationen, um wenigstens einen Kubus einer seismischen Impedanz zu erstellen;
c) ein Kubus lithoseismischer Fazies wird erstellt, wobei eine lithoseismische Analyse unternommen wird, die eine Interpretation des besagten Kubus der seismischen Impedanz hinsichtlich lithoseismischen Fazies mithilfe der genannten Daten der Bohrlöcher darstellt;
d) mithilfe der genannten Daten der Bohrlöcher, werden zeitgemäß seismische Impedanzen der Bohrlöcher bestimmt, sowie der gleichfalls auch zeitgemäßen Differenzialdrücke der Bohrlöcher;
e) für jede einzelne lithoseismische Fazie wird wenigstens eine petro-akustische Beziehung festgelegt, welche die genannten seismischen Impedanzen der betreffenden Bohrlöcher den Differenzialdrücken der Bohrlöcher im genannten Intervall der Analyse zuordnet;
f) Bestimmung eines Kubus eines Differenzialdrucks mit Verwandlung des genannten Kubus der seismischen Impedanz mithilfe der bezeichneten petro-akustischen Beziehung, sowie des Kubus der lithoseismischen Fazies;
g) Bestimmung eines Grenzdruckkubus ab dem genannten Kubus der seismischen Impedanz;
h) die genannten Flüssigkeitsdrücke werden festgelegt über den gesamten Umfang des angegebenen Bereichs, wobei eine Differenzierung unternommen wird zwischen den besagten Differenzialdrücken und dem Grenzdruck.

**2.** Verfahren nach Anspruch 1, bei dem die benannten seismischen Daten 3D seismische Einkomponenten-Daten auf Welle P darstellen, teilweise zusammengefasst in der Form von Winkelklassen nach Bearbeitung in aufrechterhaltenen Amplituden und NMO Korrektur.

**3.** Verfahren nach Anspruch 2, bei dem die genannte stratigrafische Inversion vor der Summierung folgende Abschnitte umfasst:

- für jede Winkelklasse wird eine kohärente kleine Welle mit den genannten Daten der Bohrlöcher entnommen;
- *a priori* wird ein Modell erstellt, welches einen Kubus umfasst vor der Impedanz der Welle P, sowie einen Kubus vor der Impedanz der Welle S,
- eine stratigrafische Inversion wird vor der Summierung sämtlicher für jede Winkelklasse bestimmten Winkeln

EP 1 963 886 B1

unternommen, a priori auf Grundlage der besagten kleinen Welle, sowie des genannten Modells.

4. Verfahren nach einem der vorhergehenden Ansprüche, bei dem die lithoseismische Analyse eine allgemeine Analyse der hauptsächlichen Komponenten umfasst, mit einer nachfolgenden Analyse lithoseismischer Fazien, welche mithilfe der besagten Daten der Bohrlöcher bestimmt wurden.

5. Verfahren nach einem der vorhergehenden Ansprüche, bei dem die lithoseismische Analyse wenigstens einen Unterschied zwischen lehmigen und sandigen Fazies zulasst.

6. Verfahren nach einem der vorhergehenden Ansprüche, bei dem die besagten Daten der Bohrlöcher wenigstens die folgenden Daten der Tiefe (z) umfassen:

   - seismische Beschleunigungen als Folge von akustischen Diagraphien;
   - die allumfassende Dichte $p(z)$
   - Flüssigkeitsdruck, $P_{pore}(z)$;

7. Verfahren nach Anspruch 6, bei dem die auf Grundlage der Tiefe $z$ der Bohrlöcher festgelegten Daten laut folgender Formel in Zeitfunktionen $t$ verwandelt werden :

$$t = \int_0^z \frac{2dz}{V_p(z)}$$

wobei $V_p(z)$ die seismischen Beschleunigungen von Welle P darstellt.

8. Verfahren nach Anspruch 7, bei dem die genannte petro-akustische Beziehung zeitmäßig festgelegt wird, mit Durchführung der folgenden Abschnitte:

   - seismische Impedanzen werden bei dem genannten Bohrloch auf Grundlage der Gesamtdichte errechnet, sowie die benannten seismischen Beschleunigungen;
   - Grenzdrücke werden errechnet mithilfe der Daten der seismischen Beschleunigungen, sowie der Gesamtdichte, für jeden Zeitabschnitt der die Bohrlöcher umfassenden Daten;
   - Differenzialdrücke werden errechnet durch die Differenz zwischen dem Fluiddruck bei dem betreffenden Bohrloch $P_{pors}(t)$ sowie des Grenzdrucks für jeden Zeitabschnitt der die Bohrlöcher umfassenden Daten;
   - eine Beziehung wird eingeschätzt mithilfe der seismischen Beschleunigungs- sowie Grenzdruckdaten;

9. Verfahren nach einem der vorherigen Ansprüche, bei dem der genannte Kubus des Grenzdruckes $P_{conf}(x, y, t)$ mit folgender Gleichung festgelegt wird:

$$P_{conf}(x,y,t) = \int_0^t \frac{1}{2} I_p(x,y,t) g \ dt \quad \text{oder} \quad I_p(x,y,t)$$

stellt einen Kubus akustischer Impedanzen dar.

10. Verfahren nach einer der vorherigen Ansprüche, bei dem Unterdrückungsbereiche einer Ölbohrung festgestellt werden, mit Einsatz eines Schwellwertkriteriums hinsichtlich der bezeichneten Flüssigkeitsdrücke.

11. Verfahren nach einer de vorhergehenden Ansprüche, bei dem eine Zeit/Tiefe Verwandlung der angeführten, bewerteten Flüssigkeitsdrücke hergestellt wird.

12. Verfahren nach Anspruch 11, bei dem von den Tiefenabschnitten der Unterdrückungsbereiche Markierungen unternommen und auch die Bedingungen der Bohrungen verändert werden, angesichts der Lage sowie der Intensität der Unterdrückungszonen.

13. Verfahren nach Anspruch 12, bei dem die Strecke des Bohrloches verändert wird, um die benannten Unterdrük-

17

kungsbereiche zu vermeiden.

14. Verfahren nach Anspruch 12, bei dem der Einspritzdruck der bei den Bohrungen verwendeten Flüssigkeiten verändert wird, um die Suppressionen der unterirdischen Flüssigkeiten auszugleichen.

15. Verfahren nach einem der vorhergehenden Ansprüche, bei dem die bezeichneten unterirdischen Flüssigkeitsdrücke ausgewertet werden, bei Tiefen die von den Bohrungen noch nicht erreicht wurden, mit einem Tiefen mit Lithologien von bereits erreichten Tiefen, mit Anwendung - bei jeder der genannten lithoseismischen Fazien - der genannten petro-akustischen Richtlinien, wobei die angegebenen kleinen Wellen dem Intervall der Analyse in den tiefsten Zeitabschnitten entsprechen.

16. Verfahren nach Anspruch 15, bei dem die Unterdrückungsbereiche der Tiefen, die von der Bohrung noch nicht erreicht wurden, vorausgesagt werden.

17. Verfahren nach einer der vorherigen Ansprüche, bei dem eingeschätzt wird, dass die Flüssigkeitsdrücke hydrostatisch sind, wobei wenigstens eine der folgenden Daten in Gebrauch genommen wird:

- seismische Beschleunigungen, eingeschätzt mit gebräuchlichen Beschleunigungsanalysen;
- eingeschätzte Dichten durch empirische Beziehungen von Gardner auf Grundlage der bezeichneten seismischen Beschleunigungen.

(1b) $WD(z)$

(1a) $SD(x, y, t)$

WAL

SAL

WE, MB

LSA

PAA

(7b) $I_P(t) = f_{litho}(P_{diff}(t))$

$I_S(t) = g_{litho}(P_{diff}(t))$

(7a) $I_P(x, y, t)$
$I_S(x, y, t)$
$LithoS(x, y, t)$

(8) $P_{diff}(x, y, t)$

(9) $P_{conf}(x, y, t)$

(10) $P_{pore}(x, y, t)$

**Fig. 1**

①a

SAL

①b

②b

| ②a | TAi, i=1 |

| ③a | TSDA1(x,y,t), TSDA2(x,y,t),... |

| ④a | WE→ $w1(t)$, $w2(t)$, ... | ④b | MB→ $I_{P,m}(x,y,t)$, $I_{S,m}(x,y,t)$ |

| ⑤a | $SI \rightarrow I_P{}^{TAi}(x,y,t)$, $I_S{}^{TAi}(x,y,t)$ |

| ⑥a | LSA →LithoS$^{TAi}(x,y,t)$ |

⑥b

*i=i+1*

⑦a

**Fig. 2**

**Fig. 3**

Fig. 4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **BARNOLA, A.S. ; ANDRIEUX B. ; TONELLOT T. ; VOUTAY O.** Pre-stack stratigraphie inversion and attribute analysis for optimal reservoir characterisation. *73rd Ann. Internat. Mtg: Soc. of Expl. Geophys.,* 2003, 1493-1496
- **BERTRAND, C. ; TONELLOT T. ; FOURNIER F.** Seismic facies analysis applied to P and S impedances from pre-stack inversion. *72nd Ann. Internat. Mtg: Soc. of Expl. Geophys.,* 2008, 217, 220
- **BOURBIÉ, T. ; COUSSY, O. ; ZINSZNER, B.** Acoustics ofporous media. Editions Technip, 1987
- Inversion with A Priori Information: An Approach to Integrated Stratigraphie Interpretation, Reservoir Geophysics. **BRAC J.P. et al.** Investigation in Geophysics. 1988
- **T. TONELLOT ; D. MACÉ ; V. RICHARD.** Prestack elastic waveform inversion using a priori information. *69th Ann. Internat. Mtg: Soc. of Expl. Geophys.,* 1989, 800-804
- **EBERHART-PHILLIPS, D. ; HAN, D.-H. ; ZOBACK, M. D.** Empirical relationships among seismic velocity, effective pressure, porosity, and clay content in sandstone. *Geophysics,* 1989, vol. 54, 82-89
- **GRAULS, D. ; DUNAND, J.P. ; BEAUFORT, D.** *Predicting abnormal pressure from 2D seismic velocity modeling: Offshore Technology Conference,* 1995, 7692
- **HARKINS, K.L. ; BAUGHER, J.W.** Geological significance of abnormal formation pressures. *J. Petroleum Geol.,* 1969, 961-966
- **LUCET, N. ; DÉQUIREZ, P. -Y. ; CAILLY, F.** Well to seismic calibration: A multiwell analysis to extract one single wavelet. *70th Ann. Internat. Mtg: Soc. of Expl. Geophys.,* 2000, 1615-1618
- **PENNEBECKER, E.S.** Seismic data indicate depth, magnitude of abnormal pressure. *World oil,* 1968, vol. 166, 73-78
- **REYNOLDS, E.B.** Predicting overpressured zones with seismic data. *World oil,* 1970, vol. 171, 78-82
- **SHAPIRO, S.A.** Elastic piezosensitivity of porous and fractured rocks. *Geophysics,* 2003, vol. 68, 482-486
- **TONELLOT, T. ; MACÉ, D. ; RICHARD, V.** Joint stratigraphie inversion of angle-limited stacks. *71st Ann. Internat. Mtg: Soc. of Expl. Geophys.,* 2001, 227-230
- **VOUTAY, O. ; FOURNIER, F. ; ROYER, J.** Seismic interprétation with new attributes extracted from a prestack multicube analysis. *72nd Ann. Internat. Mtg: Soc. of Expl. Geophys.,* 2002, 1762-1765
- **YILMAZ, O.** Seismic Data Processing. *Soc. of Expl. Geophys.,* 1987, 526
- **ZIMMERMAN, R.W.** The effect of pore structure on the pore and bulk compressibility of consolidated sandstones. *Ph.D. dissertation,* 1984